# EUROPEAN PATENT APPLICATION

(11) **EP 3 537 053 A1**
(43) Date of publication of application: **11.09.2019**
(21) Application number: 17868055.9
(22) Date of filing: 09.10.2017
(51) Int. Cl.: F24F 1/00, F24S 40/80, F24S 40/46, F24S 10/40

(54) **SOLAR HEAT COLLECTOR**

(30) Priority: 07.11.2016 JP 2016217138
(71) Applicant: Kabushiki Kaisha Toyota Jidoshokki, Kariya-shi, Aichi 448-8671 (JP)
(72) Inventor: MOCHIZUKI Kenji, Kariya-shi Aichi 448-8671 (JP)
(74) Representative: TBK
(86) International application number: PCT/JP2017/036557
(87) International publication number: WO 2018/083945

(57) **Abstract**

A getter holder includes a supporting member joined to a bellows ring, and a first accommodating member and a second accommodating member that are joined to the supporting member. The second accommodating member is aligned with the first accommodating member side by side in an axial direction of the heat collecting tubes. The getter holder has an annular shape that has a void portion in a circumferential direction of the getter holder. From the void portion, a getter member that has a tablet-like shape is inserted into the first accommodating member and the second accommodating member. An outer peripheral surface of the first accommodating member and an outer peripheral surface of the second accommodating member each include a plurality of slits that are formed at intervals in respective circumferential directions of the first accommodating member and the second accommodating member. The slits form openings of the first accommodating member and the second accommodating member.

## Description

### TECHNICAL FIELD

The present invention relates to a solar heat collector and, more particularly, to a solar heat collector that includes a getter member that adsorbs gases.

### BACKGROUND ART

In a solar heat collector, sun light heats a heating-medium circulating tube that is made of metal and through which various heating media flow so that the heating media are heated and the heat is utilized. In order to prevent the heat transfer from the heating-medium circulating tube to the atmosphere and thus to prevent the loss of heat from the heating media, the heating-medium circulating tube is covered by a light transmitting glass tube, and an annular space between the glass tube and the heating-medium circulating tube is maintained in vacuum. Consequently, the heating-medium circulating tube is thermally insulated against the atmosphere.

However, gases that have been adsorbed by metal which forms the heating-medium circulating tube are released into the annular space, or gases that leak in through joint portions where the heating-medium circulating tube is joined to the glass tube are released into the annular space. Further, gases generated from a heating medium that is decomposed by heat are released into the annular space through the heating-medium circulating tube. These gases are mainly hydrogen of which molecules are small. Since the gases released into the annular space lower vacuum degree of the annular space, thermal insulation capability of the heating-medium circulating tube against the atmosphere decreases gradually. Consequently, heat loss of the solar heat collector increases and the efficiency of the solar heat collector decreases.

A solar heat collector disclosed in Patent Document 1 includes a getter holder that includes an accommodating member in an annular space thereof, and the accommodating member accommodates a getter member that adsorbs gases, so that the vacuum degree of the annular space is ensured.

### Citation List

### Patent Document

Patent Document 1: Japanese Patent Application Publication No. 2015-14444

### SUMMARY OF INVENTION

### Technical Problem

A solar heat collector generally includes a plurality of heating-medium circulating tubes connected in series, and a heating medium is circulated successively through the plurality of heating-medium circulating tubes by a pump so that the heating medium is gradually heated while the heating medium flows from the upstream side to the downstream side. Consequently, the heating medium on the downstream side of the solar heat collector has a higher temperature than the heating medium on the upstream side of the solar heat collector.

Therefore, it is more difficult to ensure vacuum degree of the annular spaces on the downstream side of heating medium of the solar heat collector than to ensure vacuum degree of the annular spaces on the upstream side of the heating medium of the solar heat collector. Therefore, heat loss of the solar heat collector increases and the efficiency of the solar heat collector decreases. Thus, the quantity or number of getter members disposed on the downstream side should preferably be increased.

However, a conventional getter holder is formed by pressing one sheet metal into an annular member that includes an accommodating member that is concentric with the heating-medium circulating tubes. Therefore, there has been a problem that it is difficult to increase the number of accommodating members by means of the pressing.

The present invention is made to solve the above problems. It is an object of the present invention to provide a solar heat collector that includes a getter holder that allows an increase in the number of accommodating members as necessary, so that the number of getter members provided to each heat collecting tube may be flexibly adjusted.

### Solution to Problem

To solve the above problems, a solar heat collector according to the present invention includes: a heat collecting tube that includes: a heating-medium circulating tube through which a heating medium circulates; a glass tube that covers an outer peripheral surface of the heating-medium circulating tube and forms an annular space between the glass tube and the heating-medium circulating tube; a flange that is disposed on the heating-medium circulating tube; a thermal-expansion-difference absorbing member that is disposed between the flange and the glass tube and absorbs thermal-expansion difference between the heating-medium circulating tube and the glass tube; a getter member that adsorbs a gas that exists within the annular space; and a getter holding portion that accommodates and holds the getter member. The getter holding portion includes: a first accommodating member; and a second accommodating member that is aligned with the first accommodating member side by side in an axial direction or a radial direction of the heat collecting tube.

The getter holding portion may include a supporting member that supports the first accommodating member inside the thermal-expansion-difference absorbing member.

A bellows ring to which the thermal-expansion-difference absorbing member is joined may be disposed between the glass tube and the thermal-expansion-difference absorbing member, and the supporting member may be joined to the bellows ring.

The first accommodating member may be joined to the flange.

The second accommodating member may be joined to the supporting member.

The second accommodating member may be joined to the first accommodating member.

The second accommodating member may be disposed inside the thermal-expansion-difference absorbing member.

The first accommodating member and the second accommodating member may each be formed from a bent sheet metal.

The first accommodating member and the second accommodating member may each have a plurality of openings in circumferential directions of the first accommodating member and the second accommodating member.

### Advantageous Effects of Invention

The solar heat collector according to the present invention is a heat collecting tube that includes: a heating-medium circulating tube through which a heating medium circulates; a glass tube that covers an outer peripheral surface of the heating-medium circulating tube and forms an annular space between the glass tube and the heating-medium circulating tube; a flange that is disposed on the heating-medium circulating tube; a thermal-expansion-difference absorbing member that is disposed between the flange and the glass tube and absorbs thermal-expansion difference between the heating-medium circulating tube and the glass tube; a getter member that adsorbs a gas that exists within the annular space; and a getter holding portion that accommodates and holds the getter member. The getter holding portion includes: a first accommodating member; and a second accommodating member that is aligned with the first accommodating member side by side in an axial direction or a radial direction of the heat collecting tube. Therefore, the number of the getter members provided to each heat collecting tube is flexibly adjusted.

### BRIEF DESCRIPTION OF DRAWINGS

FIG. 1 is a schematic view of a solar thermal power generation plant that includes a solar heat collector, according to a first embodiment of the present invention.
FIG. 2 is a cross-sectional schematic view of the solar heat collector illustrated in FIG. 1.
FIG. 3 is a schematic view of a getter holder illustrated in FIG. 2.
FIG. 4 is a cross-sectional schematic view of the getter holder illustrated in FIG. 2.
FIG. 5 is a cross-sectional schematic view of a getter holder according to a second embodiment of the present invention.
FIG. 6 is a cross-sectional schematic view of a getter holder according to a third embodiment of the present invention.
FIG. 7 is a cross-sectional schematic view of a getter holder according to a fourth embodiment of the present invention.
FIG. 8 is an enlarged cross-sectional schematic view of a solar heat collector according to a fifth embodiment of the present invention.

### DESCRIPTION OF EMBODIMENTS

### First Embodiment

Hereinafter, a first embodiment of the present invention will be described with reference to the drawings.

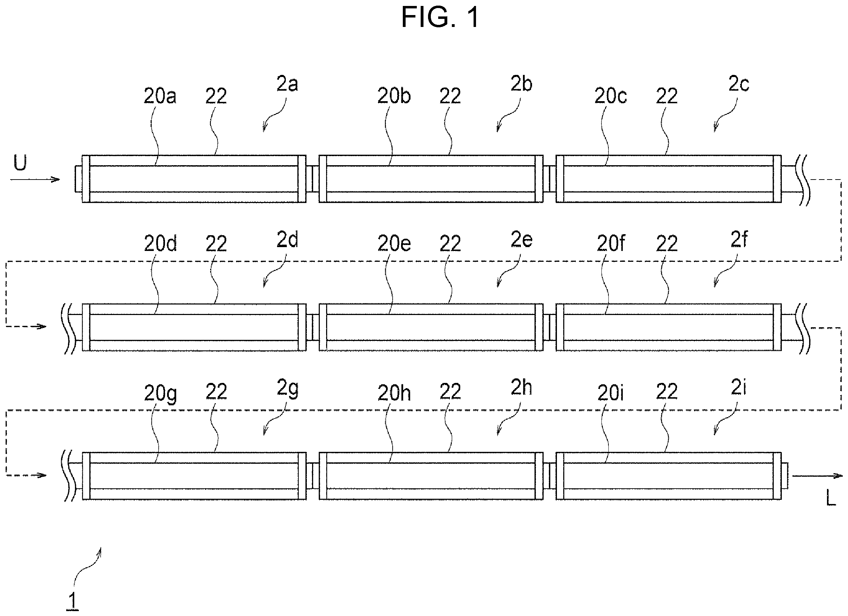

FIG. 1 is a schematic view of a solar heat collector according to the first embodiment of the present invention.

A solar heat collector 1 includes a plurality of heat collecting tubes 2 connected in series, and is disposed in a heat collecting system, such as a trough-type heat collecting system, which is not illustrated, to constitute a solar thermal power generation plant. In an example illustrated in FIG. 1, nine heat collecting tubes 2a to 2i are connected. The heat collecting tubes 2a to 2i include heating-medium circulating tubes 20a to 20i through which a heating medium, such as molten salt, circulates, and glass tubes 22 that cover outer peripheral surfaces of the heating-medium circulating tubes 20a to 20i and form annular spaces between the glass tubes 22 and the heating-medium circulating tubes 20a to 20i. The total length of each glass tube 22 is shorter than the total length of each heating-medium circulating tube 20.

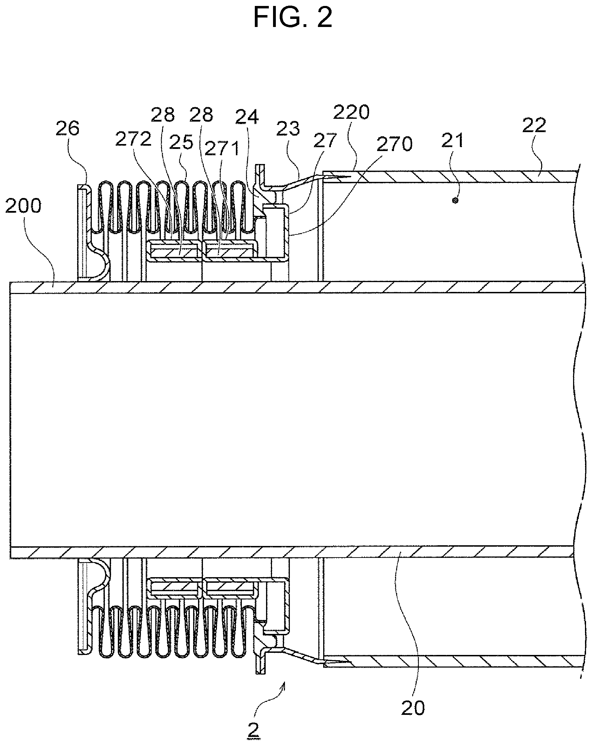

FIG. 2 illustrates one end of one of the heat collecting tubes 2. Although FIG. 2 illustrates one end of one of the heat collecting tubes 2, the other end of one of the heat collecting tubes 2 has the same configuration as the configuration which is described below. A Kovar ring 23, which is made of Kovar and is a cylindrical member that is concentric with a heating-medium circulating tube 20, is disposed at a glass-tube end 220 of a glass tube 22. An annular bellows ring 24 that is concentric with the heating-medium circulating tube 20 is joined to the Kovar ring 23 by welding or the like. One end of an annular bellows 25 that is concentric with the heating-medium circulating tube 20 is joined to the bellows ring 24 by welding. A flange 26 that is an annular member and is concentric with the heating-medium circulating tube 20 is joined to the other end of the bellows 25 by welding or the like. An inner circumferential portion of the flange 26 is joined to an outer peripheral surface of a circulating-tube end 200 of the heating-medium circulating tube 20 by welding or the like.

The heating-medium circulating tube 20, the bellows ring 24, the bellows 25, and the flange 26 are made of metal, such as stainless steel. The bellows 25 also constitute a thermal-expansion-difference absorbing member that absorbs thermal-expansion difference between the heating-medium circulating tube 20 and the glass tube 22.

The glass tube 22, the Kovar ring 23, the bellows ring 24, the bellows 25, the flange 26, and the heating-medium circulating tube 20 cooperate to seal an annular space 21 against the atmosphere around the solar heat collector 1, and the annular space 21 is maintained in vacuum.

An annular getter holder 27 that is concentric with the heating-medium circulating tube 20 is attached to the bellows ring 24. The getter holder 27 is disposed radially inside the bellows ring 24. The getter holder 27 constitutes a getter holding portion.

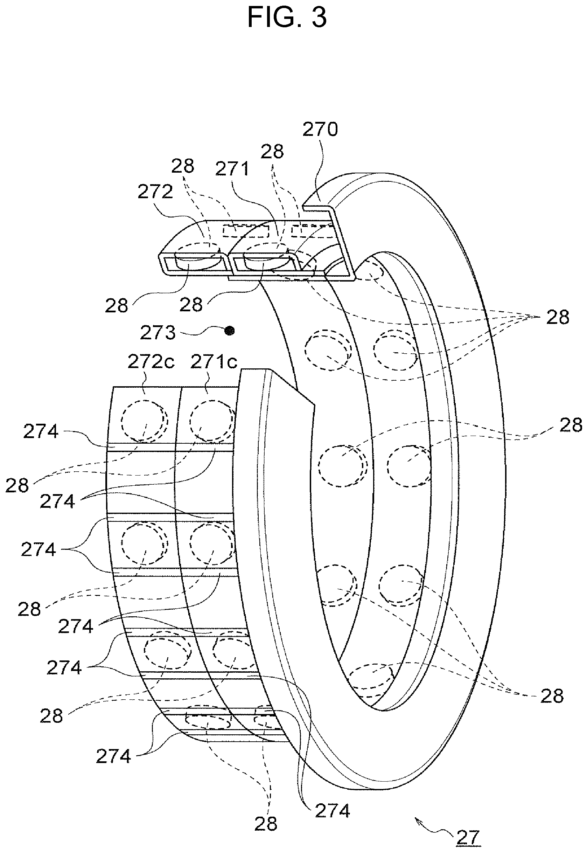

As illustrated in FIG. 3, the getter holder 27 includes a supporting member 270 joined to the bellows ring 24 (see FIG. 2), and a first accommodating member 271 and a second accommodating member 272 that are joined to the supporting member 270. The supporting member 270 supports the first accommodating member 271 and the second accommodating member 272 radially inside the bellows 25 (see FIG. 2).

The second accommodating member 272 is aligned with the first accommodating member 271 side by side in an axial direction of the heat collecting tube 2. The getter holder 27 has an annular shape that has a void portion in a circumferential direction of the getter holder 27. Through the void portion 273, getter members 28 each formed in a tablet are inserted into the first accommodating member 271 and the second accommodating member 272. The quantity or number of the getter members 28 to be inserted is adjusted as necessary, as described below. The locations of the getter members 28 in the circumferential direction within the first accommodating member 271 and the second accommodating member 272 may be modified as necessary. Further, an outer peripheral surface 271c of the first accommodating member 271 and an outer peripheral surface 272c of the second accommodating member 272 each have a plurality of slits 274 that are formed at intervals in respective circumferential directions of the first accommodating member 271 and the second accommodating member 272. The slits 274 form openings of the first and second accommodating members 271 and 272.

Each getter member 28 is formed of a shaped metal, such as zirconium-based alloy or titanium. The getter members 28 are provided so as to adsorb gas molecules within the annular space 21 illustrated in FIG. 3. The getter members 28 may be made of another appropriate member or be in another appropriate shape.

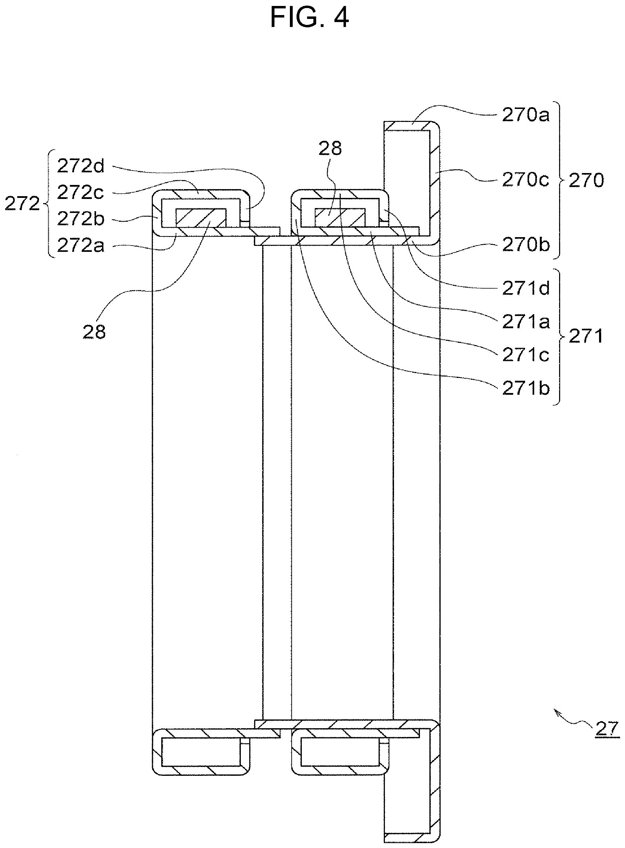

FIG. 4 is a cross-sectional schematic view of the getter holder 27 illustrated in FIG. 2. The supporting member 270 includes a first end 270a and a second end 270b formed by bending an elongated sheet metal at a right angle along long sides of the sheet metal. Next, the sheet metal is longitudinally bent into an annular shape which has a void portion in a circumferential direction of the annular shape. Specifically, the supporting member 270 includes the first end 270a that is an outer-peripheral-surface-side end and extends in an axial direction of the heating-medium circulating tube 20 (see FIG. 2), the second end 270b that is an inner-peripheral-surface-side end and extends in the axial direction of the heating-medium circulating tube 20 (see FIG. 2), and a perpendicular portion 270c that extends perpendicularly to an axis of the heating-medium circulating tube 20 and is adjacent to the first end 270a and the second end 270b. The first accommodating member 271 and the second accommodating member 272 are joined to the second end 270b.

The first accommodating member 271 is formed from an elongated sheet metal. A plurality of slits 274 (see FIG. 3) are formed at one of long sides of the sheet metal at regular intervals, so that rectangular portions are formed in the first accommodating member 271. Next, the first accommodating member 271 is bent at the slits 274 provided at opposite ends of each of the rectangular portions to create accommodating portions each having a rectangular cross section. One getter member 28 is to be accommodated in each of the accommodating portions. Next, the sheet metal is longitudinally bent into an annular shape that has a void portion in a circumferential direction of the annular shape. Since the sheet metal has the slits 274, it is easy to bend the sheet metal longitudinally into an annular shape. The second accommodating member 272 is formed in the same manner as the first accommodating member 271.

Specifically, the first accommodating member 271 has an inner peripheral surface 271a that extends in the axial direction of the heating-medium circulating tube 20. The inner peripheral surface 271a is joined to the second end 270b by welding or the like. A first perpendicular portion 271b extends from the inner peripheral surface 271a perpendicularly to the axial direction of the heating-medium circulating tube 20. An outer peripheral surface 271c extends from the first perpendicular portion 271b in the axial direction of the heating-medium circulating tube 20 while facing the inner peripheral surface 271a. A second perpendicular portion 271d extends from the outer peripheral surface 271c perpendicularly to the axial direction of the heating-medium circulating tube 20 while facing the first perpendicular portion 271b. A clearance is formed between the second perpendicular portion 271d and the inner peripheral surface 271a so that the second perpendicular portion 271d does not touch the inner peripheral surface 271a.

Similarly, the second accommodating member 272 has an inner peripheral surface 272a that extends in the axial direction of the heating-medium circulating tube 20. The inner peripheral surface 272a is joined to the second end 270b by welding or the like. A first perpendicular portion 272b extends from the inner peripheral surface 272a perpendicularly to the axial direction of the heating-medium circulating tube 20. An outer peripheral surface 272c extends from the first perpendicular portion 272b in the axial direction of the heating-medium circulating tube 20 while facing the inner peripheral surface 272a. A second perpendicular portion 272d extends from the outer peripheral surface 272c perpendicularly to the axial direction of the heating-medium circulating tube 20 while facing the first perpendicular portion 272b. A clearance is formed between the second perpendicular portion 272d and the inner peripheral surface 272a so that the second perpendicular portion 272d does not touch the inner peripheral surface 272a.

In the solar heat collector 1 illustrated in FIG. 1, a heating medium is circulated successively through the heating-medium circulating tubes 20 by a pump, which is not illustrated. Sun light impinges on the heat collecting tubes 2a to 2i of the solar heat collector 1, passes through the glass tubes 22, and heats the heating-medium circulating tubes 20. Since the heating medium is heated while the heating medium circulates successively through the heating-medium circulating tubes 20, the heating medium on a downstream side has a higher temperature than the heating medium on an upstream side. For example, a temperature of the heating medium on the downstream side is 650°C, and a temperature of the heating medium on the upstream side is 350°C. Thus, temperatures of the heating-medium circulating tubes 20 to which the heating medium transfers heat also become successively higher from the heating-medium circulating tube 20a on the upstream side toward the heating-medium circulating tube 20i on the downstream side illustrated in FIG. 1, for example.

As described above, the annular spaces 21 are sealed, as illustrated in FIG. 2. However, gases that have been adsorbed by metal forming the heating-medium circulating tubes 20 are released into the annular spaces 21, or gases that leak in through joint portions where the heating-medium circulating tubes 20 are joined to the glass tubes 22 are released into the annular spaces 21. Further, gases generated from a heating medium that is decomposed by heat are released into the annular spaces 21 through the heating-medium circulating tubes 20. These gases are mainly hydrogen of which molecules are small. Since the gases released into the annular spaces 21 lower the vacuum degree of the annular spaces 21, the thermal insulation capability of the heating-medium circulating tubes 20 against the atmosphere decreases gradually. Consequently, heat loss of the solar heat collector 1 increases, and efficiency of the solar heat collector 1 decreases.

Generally, as the temperature of metal forming the heating-medium circulating tubes 20 rises, the amount of gases which has been adsorbed by the metal and is released into the annular spaces 21 increases. Further, as the temperature of the heating-medium circulating tubes 20 rises, the amount of gases, such as hydrogen, that is generated by decomposition of the heating medium increases. Consequently, the amount of gases that penetrate through the heating-medium circulating tubes 20 into the annular spaces 21 increases.

As described above, since gas molecules released into the annular spaces 21 are adsorbed by the getter members 28, the vacuum degree of the annular spaces 21 is maintained. However, as the temperature of the getter members 28 rises, the amount of gases adsorbed per a certain quantity or number of the getter members 28 decreases. Therefore, in order to maintain the vacuum degree within each annular space 21 (see FIG. 2) at a specified level across the whole solar heat collector 1, as illustrated in FIG. 1, the quantity or number of the getter members 28 (see FIG. 2) needs to be increased with decreasing distance to the heat collecting tube 2i on the downstream side.

In the first embodiment of the present invention, each getter holder 27 includes the first accommodating member 271 and the second accommodating member 272, as described above. Therefore, in order to maintain the vacuum degree of the annular space 21 of each heat collecting tube 2, the number of the getter members 28 provided to each heat collecting tube 2 is more flexibly adjusted in accordance with the configurations of solar thermal power generation plants or surrounding environments around solar thermal power generation plants, as compared with the conventional heat collecting tubes.

As described above, the first embodiment of the present invention includes the heat collecting tubes 2 that include the heating-medium circulating tubes 20 through which the heating medium circulates, the glass tubes 22 that cover outer peripheral surfaces of the heating-medium circulating tubes 20 and form the annular spaces 21 between the glass tubes 22 and the heating-medium circulating tubes 20, the flanges 26 that are disposed on the heating-medium circulating tubes 20, the bellows 25 that are disposed between the flanges 26 and the glass tubes 22 and absorb the thermal-expansion difference between the heating-medium circulating tubes 20 and the glass tubes 22, the getter members 28 that adsorb gases that exist within the annular spaces 21, and getter holders 27 that accommodate and hold the getter members 28, and each getter holder 27 includes the first accommodating member 271, and the second accommodating member 272 that is aligned with the first accommodating member 271 side by side in an axial direction of the heat collecting tubes 2. Therefore, the number of the getter members 28 provided to each heat collecting tube 2 is flexibly adjusted.

Further, the getter holders 27 include the supporting members 270 that support the first accommodating members 271 inside the bellows 25, the bellows rings 24 to which the bellows 25 are joined are disposed between the glass tubes 22 and the bellows 25, the supporting members 270 are joined to the bellows rings 24, and the second accommodating members 272 are disposed inside the bellows 25. Therefore, the second accommodating members 272 do not block sun light impinging on the heat collecting tubes 2. In addition, the first accommodating members 271 and the second accommodating members 272 are disposed separated from the circulating-tube ends 200 where the temperatures of the heating-medium circulating tubes 20 is highest. Therefore, the first accommodating members 271 and the second accommodating members 272 may be disposed without lowering the efficiency of the heat collecting tubes 2 and without reducing the amount of gases the getter members 28 adsorb.

Further, since the first accommodating members 271 and the second accommodating members 272 are each formed from a bent sheet metal, it is easier to form the getter holders 27, so that the productivity of the getter holders 27 is increased.

Further, since the first accommodating members 271 and the second accommodating members 272 include slits 274, the first accommodating members 271 and the second accommodating members 272 are easily bent and welded, so that the productivity of the getter holders 27 is increased.

Although the nine heat collecting tubes 2a to 2i are disposed in the first embodiment of the present invention, the number of the heat collecting tubes 2 necessary for the whole solar heat collector 1 may be determined appropriately in accordance with the configuration of the solar thermal power generation plant where the solar heat collector 1 is disposed.

### Second Embodiment

Next, a configuration of a second embodiment of the present invention will be described. In the following embodiment, the same reference numerals as those in FIGS. 1 to 4 denote the same or similar components. Therefore, the same or similar components will not be described in detail.

In the second embodiment, a third accommodating member 275 is disposed in addition to the first accommodating member 271 and the second accommodating member 272.

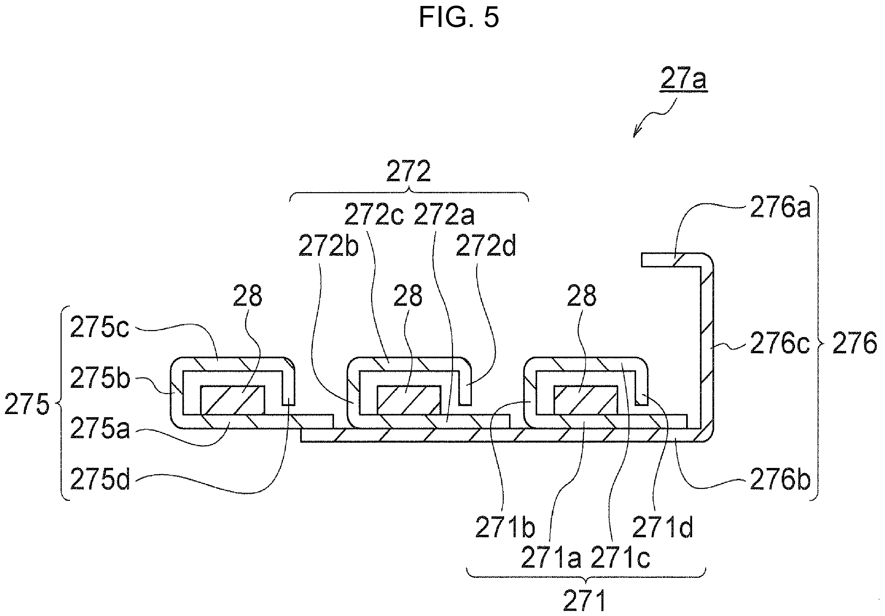

FIG. 5 illustrates a configuration of a getter holder 27a that corresponds to the getter holder 27 in FIG. 4, and illustrates a cross section of an upper portion of the getter holder 27a. A supporting member 276 corresponds to the supporting member 270 (see FIG. 4) in the first embodiment, and includes a first end 276a that corresponds to the first end 270a, a second end 276b that corresponds to the second end 270b, and a perpendicular portion 276c that corresponds to the perpendicular portion 270c. The second end 276e is longer than the second end 270b in an axial direction of a heat collecting tube 2 (see FIG. 2). The third accommodating member 275 is aligned with the second accommodating member 272 side by side in the axial direction of the heat collecting tube 2.

The third accommodating member 275 has the same configuration as the second accommodating member 272, and includes an inner peripheral surface 275a that extends in an axial direction of a heating-medium circulating tube 20. The inner peripheral surface 275a is joined to the second end 276e by welding or the like. Further, the third accommodating member 275 includes a first perpendicular portion 275b that corresponds to the first perpendicular portion 272b, an outer peripheral surface 275c that corresponds to the outer peripheral surface 272c, and a second perpendicular portion 275d that corresponds to the second perpendicular portion 272d. A clearance is formed between the second perpendicular portion 275d and the inner peripheral surface 275a so that the second perpendicular portion 275d does not touch the inner peripheral surface 275a.

In the second embodiment of the present invention, the third accommodating member 275 is disposed in addition to the first accommodating member 271 and the second accommodating member 272, as described above. Therefore, the number of the accommodating members provided to each heat collecting tube 2 is increased as necessary, and the number of the getter members 28 provided to each heat collecting tube 2 is flexibly adjusted.

In the second embodiment of the present invention, the three accommodating members, namely, the first accommodating member 271, the second accommodating member 272, and the third accommodating member 275, are disposed. However, an additional accommodating member(s) may be disposed as necessary.

### Third Embodiment

Next, a configuration of a third embodiment of the present invention will be described.

In the third embodiment, a second accommodating member 272 is disposed radially inside the first accommodating member 271 side by side in a radial direction of the heat collecting tube 2.

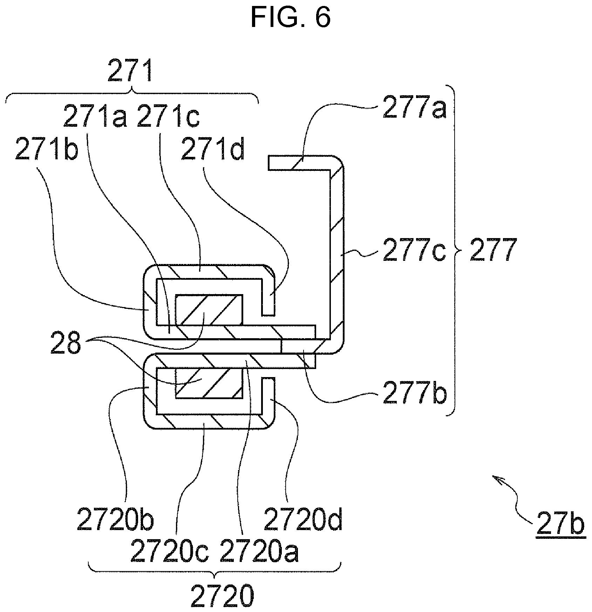

FIG. 6 illustrates a configuration of a getter holder 27b that corresponds to the getter holder 27 in FIG. 4, and illustrates a cross section of an upper portion of the getter holder 27b. A supporting member 277 corresponds to the supporting member 270 in the first embodiment, and includes a first end 277a that corresponds to the first end 270a, a second end 277b that corresponds to the second end 270b, and a perpendicular portion 277c that corresponds to the perpendicular portion 270c. The length of the second end 277b in the axial direction of the heat collecting tube 2 (see FIG. 1) is shorter.

A second accommodating member 2720 is disposed on an inner peripheral surface of the second end 277b. The second accommodating member 2720 includes an outer peripheral surface 2720a that corresponds to the inner peripheral surface 272a of the second accommodating member 272, and an inner peripheral surface 2720c that corresponds to the outer peripheral surface 272c of the second accommodating member 272. Further, the second accommodating member 2720 includes a first perpendicular portion 2720b that corresponds to the first perpendicular portion 272b of the second accommodating member 272, and a second perpendicular portion 2720d that corresponds to the second perpendicular portion 272d. That is, the second accommodating member 2720 is slightly smaller than the second accommodating member 272, and has an annular shape in which the outer peripheral surface and the inner peripheral surface of the second accommodating member 272 are reversed. The outer peripheral surface 2720a is joined to the second end 277b by welding or the like so that the second accommodating member 2720 is disposed radially inside the first accommodating member 271 side by side in the radial direction of the heat collecting tube 2.

In the third embodiment of the present invention, the second accommodating member 2720 is radially aligned with the first accommodating member 271 side by side, as described above. Therefore, the length of the getter holder 27b in the axial direction of the heat collecting tube 2 of the heat collecting tube 2 may be reduced to be smaller.

### Fourth Embodiment

Next, a configuration of a fourth embodiment of the present invention will be described.

In the fourth embodiment, the second accommodating member is joined to the first accommodating member.

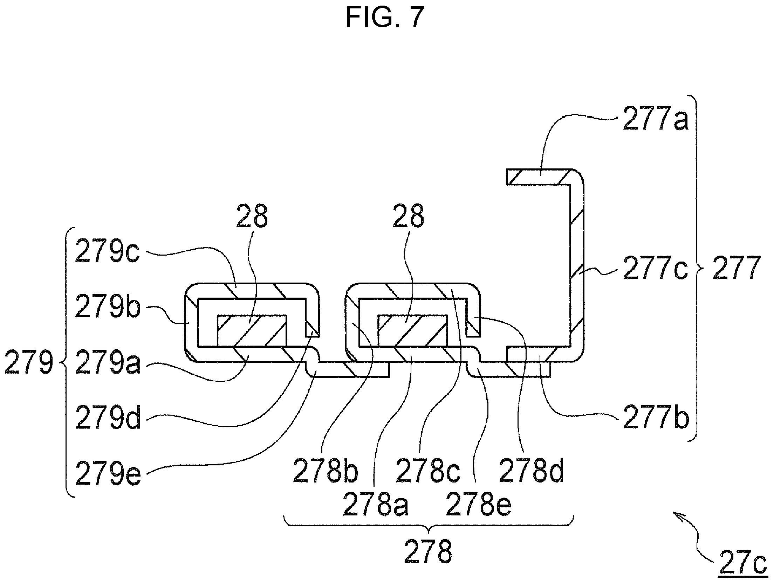

FIG. 7 illustrates a configuration of a getter holder 27c that corresponds to the getter holder 27 in FIG. 4, and illustrates a cross section of an upper portion of the getter holder 27c. The getter holder 27c includes a supporting member 277, a first accommodating member 278 joined to the supporting member 277, and a second accommodating member 279 joined to the first accommodating member 278. The first accommodating member 278 includes an inner peripheral surface 279a that corresponds to the inner peripheral surface 271a of the first accommodating member 271, a first perpendicular portion 278b that corresponds to the first perpendicular portion 271b, an outer peripheral surface 278c that corresponds to the outer peripheral surface 271c, and 278d that corresponds to the second perpendicular portion 271d. The first accommodating member 278 also includes a joint portion 278e that is a bent end of an inner peripheral surface 278a. The bent end of the inner peripheral surface 278a is bent radially inward. The joint portion 278e is joined to an inner peripheral surface of the second end 277b by welding or the like.

The second accommodating member 279 includes an inner peripheral surface 279a that corresponds to the inner peripheral surface 272a of the second accommodating member 272, a first perpendicular portion 279b that corresponds to the first perpendicular portion 272b, an outer peripheral surface 279c that corresponds to the outer peripheral surface 272c, and 279d that corresponds to the second perpendicular portion 272d. The second accommodating member 279 also includes a joint portion 279e that is a bent end of the inner peripheral surface 279a. The bent end of the inner peripheral surface 279a is bent radially inward. The joint portion 279e is joined to the inner peripheral surface 278a of the first accommodating member 278 by welding or the like.

The joint portion 278e is joined to the second end 277b and the joint portion 279e is joined to the inner peripheral surface 278a so that the first accommodating member 278 is joined to the supporting member 277, and the second accommodating member 279 is aligned with the first accommodating member 278 side by side in an axial direction of a heat collecting tube 2 (see FIG. 1). Other configurations are the same as those of the first embodiment.

In this way, in the fourth embodiment of the present invention, the joint portion 279e of the second accommodating member 279 is joined to the inner peripheral surface 278a of the first accommodating member 278 so that the second accommodating member 279 is joined to the first accommodating member 278. Therefore, the supporting member 277 may be made smaller and the materials for the supporting member 277 may be reduced.

In the fourth embodiment of the present invention, the second accommodating member 279 is aligned with the first accommodating member 278 side by side in the axial direction of the heat collecting tube 2. However, the second accommodating member 279 may be disposed radially inside the first accommodating member 278 side by side in a radial direction of the heat collecting tube 2, in the same manner as the third embodiment, by joining the joint portion 279e to the joint portion 278e, for example.

### Fifth Embodiment

Next, a fifth embodiment of the present invention will be described. The configuration of the fifth embodiment is different from the configuration of the fourth embodiment in that the first accommodating member 278 is joined to the flange 26.

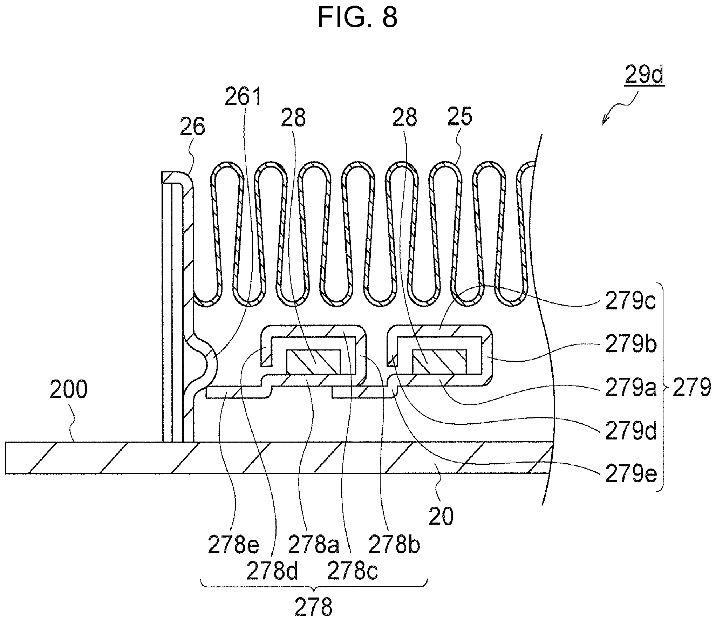

FIG. 8 illustrates a portion around an upper portion of the circulating-tube end 200 of the solar heat collector 1 according to the third embodiment of the present invention. The flange 26 includes a protrusion 261 that protrudes away from the circulating-tube end 200 in an axial direction of the heat collecting tube 2. The joint portion 278e is joined to the protrusion 261 by welding or the like. The joint portion 279e is joined to the inner peripheral surface 278a by welding or the like. Thus, the second accommodating member 279 is aligned with the first accommodating member 278 side by side in the axial direction of the heat collecting tube 2.

In the fifth embodiment of the present invention, the first accommodating member 278 is joined to the protrusion 261 of the flange 26, and the second accommodating member 279 is joined to the first accommodating member 278, as described above. Therefore, the second accommodating member 279 is aligned with the first accommodating member 278 side by side in the axial direction of the heat collecting tube 2 without a supporting member 277, so that the number of components may be reduced.

In the fourth and fifth embodiments of the present invention, the first accommodating member 278 and the second accommodating member 279 are provided. However, an additional accommodating member(s) may be disposed as necessary. For example, the additional accommodating member(s) may be joined to the second accommodating member 279.

Further, in the fourth and fifth embodiments of the present invention, an end of the inner peripheral surface 278a is bent radially inward to form the joint portion 278e, and an end of the inner peripheral surface 279a is bent radially inward to form the joint portion 279e. However, the joint portions 278e, 279e may have other appropriate shapes.

Further, in each of the first to fifth embodiments of the present invention, the heat collecting tubes 2 include the getter holders 27, 27a, 27b, 27c, and 27d that are concentric with the heating-medium circulating tubes 20. However, the getter holders 27, 27a, 27b, 27c, and 27d may have configurations and shapes other than a shape that is concentric with the heating-medium circulating tubes 20. Further, the first accommodating members 271, 278, the second accommodating members 272, 279, and 2720, and the third accommodating member 275 may have other appropriate shapes that can accommodate the getter members 28.

Further, in each of the first to fifth embodiments of the present invention, the getter holders 27, 27a, 27b, 27c, and 27d include the slits 274. However, the getter holders 27, 27a, 27b, 27c, and 27d may have openings that have a shape other than the slits 274 as long as such openings do not adversely affect holding of the getter members 28 and facilitate bending of each accommodating member into an annular shape. Further, the slits 274 may not be provided.

### Reference Signs List

- 1: solar heat collector
- 2, 2a to 2i: heat collecting tube
- 20, 20a to 20i: heating-medium circulating tube
- 21: annular space
- 22: glass tube
- 24: bellows ring
- 25: bellows (thermal-expansion-difference absorbing member)
- 26: flange
- 27: getter holder (getter holding portion)
- 28: getter member
- 270: supporting member
- 271, 278: first accommodating member
- 272, 279, 2720: second accommodating member
- 274: slit (opening)

## Claims

1. A solar heat collector comprising:
a heat collecting tube including:
a heating-medium circulating tube through which a heating medium circulates;
a glass tube that covers an outer peripheral surface of the heating-medium circulating tube and forms an annular space between the glass tube and the heating-medium circulating tube;
a flange that is disposed on the heating-medium circulating tube;
a thermal-expansion-difference absorbing member that is disposed between the flange and the glass tube and absorbs a thermal-expansion difference between the heating-medium circulating tube and the glass tube;
a getter member that adsorbs a gas that exists within the annular space; and
a getter holding portion that accommodates and holds the getter member, wherein
the getter holding portion includes:
a first accommodating member; and
a second accommodating member that is aligned with the first accommodating member side by side in an axial direction or a radial direction of the heat collecting tube.

2. The solar heat collector according to claim 1, wherein the getter holding portion includes a supporting member that supports the first accommodating member inside the thermal-expansion-difference absorbing member.

3. The solar heat collector according to claim 2, wherein
a bellows ring to which the thermal-expansion-difference absorbing member is joined is disposed between the glass tube and the thermal-expansion-difference absorbing member, and
the supporting member is joined to the bellows ring.

4. The solar heat collector according to claim 1, wherein the first accommodating member is joined to the flange.

5. The solar heat collector according to claim 2 or 3, wherein the second accommodating member is joined to the supporting member.

6. The solar heat collector according to any one of claims 1 to 4, wherein the second accommodating member is joined to the first accommodating member.

7. The solar heat collector according to any one of claims 1 to 6, wherein the second accommodating member is disposed inside the thermal-expansion-difference absorbing member.

8. The solar heat collector according to any one of claims 1 to 7, wherein the first accommodating member and the second accommodating member are each formed from a bent sheet metal.

9. The solar heat collector according to claim 8, wherein the first accommodating member and the second accommodating member each have a plurality of openings in circumferential directions of the first accommodating member and the second accommodating member.
